# EUROPEAN PATENT APPLICATION

(11) **EP 4 501 133 A1**
(43) Date of publication of application: **05.02.2025**
(21) Application number: 23774375.2
(22) Date of filing: 24.02.2023
(51) Int. Cl.: A23L 27/00

(54) **BITTERNESS MASKING AGENT FOR POTASSIUM CHLORIDE**

(30) Priority: 25.03.2022 JP 2022050644
(71) Applicant: NISSIN FOODS HOLDINGS CO., LTD., Yodogawa-ku Osaka-shi, Osaka 532-8524 (JP)
(72) Inventor: NASU, Gentaro, Osaka-shi Osaka 532-8524 (JP)
(74) Representative: Mewburn Ellis LLP
(86) International application number: PCT/JP2023/006651
(87) International publication number: WO 2023/181776

(57) **Abstract**

An object is to develop a novel bitter taste masking agent for potassium chloride, and a method of production comprising the masking agent, and the like. Provided is a bitter taste masking agent for potassium chloride comprising Peru balsam essential oil as an active component. Here, it is preferable that the bitter taste masking agent further comprises at least one or more selected from the group consisting of arginine, glutamic acid, lysine and citrulline. In addition, it is also preferable that the bitter taste masking agent further comprises at least one or more selected from the group consisting of acetoin, diacetyl and 2,3-pentanedione.

## Description

### TECHNICAL FIELD

The present invention relates to a masking agent and the like for a bitter taste when potassium chloride is used.

### BACKGROUND ART

Potassium chloride is sometimes utilized in various food products, including processed food products, for the purpose of reducing salt content. When potassium chloride is utilized, although the effect of reducing salt content can be obtained, there have been problems such as a distinctive bitter taste. As a method of solving such problems, for example, an invention described in Patent Literature 1 below has been reported.

### CITATION LIST

### PATENT LITERATURE

Patent Literature 1
Japanese Patent Laid-Open No. 2008-289426

The method of Patent Literature 1 relates to a salt substitute in which sodium gluconate and/or potassium gluconate and whey mineral are blended with potassium chloride. The invention relates to providing a salt substitute with a low sodium content, a low-salt processed food products that can reduce the amount of sodium ingested by using the substitute in place of salt, and a method of producing thereof.

Although the above method is an effective method, other methods of masking are also conceivable.

### SUMMARY OF INVENTION

### TECHNICAL PROBLEM

Therefore, the inventors have set an object of developing a novel bitter taste masking agent for potassium chloride and a method of production comprising the masking agent, and the like.

### SOLUTION TO PROBLEM

The inventors repeatedly conducted experiments with various natural ingredients, fragrances, compounds and other ingredients utilizing aromatic components thereof. As a result of their intensive researches, the inventors found that the use of balsam Peru essential oil as an essential oil component provides a masking effect for potassium chloride, thus completing the invention.

That is, the first invention of the present application is,
"A bitter taste masking agent for potassium chloride comprising Peru balsam essential oil as an active component.".

Next, in addition to Peru balsam essential oil, the use of arginine, glutamic acid, lysine or citrulline, among amino acids, can improve the bitter taste masking effect for potassium chloride.

That is, the second invention of the present application is,
"The bitter taste masking agent for potassium chloride according to claim 1, further comprising at least one or more selected from the group consisting of arginine, glutamic acid, lysine, and citrulline".

Next, in addition to Peru balsam essential oil, the use of acetoin, diacetyl or 2,3-pentanedione, among ketones, can improve the bitter taste masking effect for potassium chloride.

That is, the third invention of the present application is,
"The bitter taste masking agent for potassium chloride according to claim 1 or 2, further comprising at least one or more selected from the group consisting of acetoin, diacetyl, and 2,3-pentanedione.".

Next, in addition to Peru balsam essential oil, the use of farnesol, nerolidol, caryophyllene or nootkatone, among terpenes, can improve the bitter taste masking effect for potassium chloride.

That is, the fourth invention of the present application is,
"The bitter taste masking agent for potassium chloride according to any one of claims 1 to 3, further comprising at least one or more selected from the group consisting of farnesol, nerolidol, caryophyllene and nootkatone.".

Next, in addition to Peru balsam essential oil, the use of birch essential oil, hickory smoke essential oil, or clove essential oil as a tree-based natural fragrance can improve the bitter taste masking effect for potassium chloride.

That is, the fifth invention of the present application is,
"The bitter taste masking agent for potassium chloride according to any one of claims 1 to 4, further comprising at least one or more selected from birch essential oil, hickory smoke essential oil, and clove essential oil.".

Next, in addition to Peru balsam essential oil, the use of guaiacol, eugenol, vanillin or phenol among phenols, aromatics and aldehydes, can improve the bitter taste masking effect for potassium chloride.

That is, the sixth invention of the present application is,
"The bitter taste masking agent for potassium chloride according to any one of claims 1 to 5, further comprising at least one or more selected from the group consisting of guaiacol, eugenol, vanillin, and phenol.".

Next, in addition to Peru balsam essential oil, the use of lactic acid, tartaric acid, or malic acid, among acidulants, can improve the bitter taste masking effect for potassium chloride.

That is, the seventh invention of the present application is,
"The bitter taste masking agent for potassium chloride according to any one of claims 1 to 6, further comprising at least one or more selected from the group consisting of lactic acid, tartaric acid, and malic acid.".

Next, for the same purpose of salt reduction as above, the present applicant also intends for a potassium chloride-containing food or drink product comprising Peru balsam essential oil.

That is, the eighth invention of the present application is,
"A potassium chloride-containing food or drink product comprising Peru balsam essential oil.".

Next, the present applicant intends for a method of producing thereof.

That is, the ninth invention of the present application is,
"A method of producing a potassium chloride-containing food or drink product comprising a step of adding Peru balsam essential oil.".

Next, the present applicant also intends for a method of masking a bitter taste for a potassium chloride-containing food or drink product comprising the use of Peru balsam essential oil.

That is, the tenth invention of the present application is,
"A method of masking a bitter taste for a potassium chloride-containing food or drink product utilizing Peru balsam essential oil.".

### ADVANTAGEOUS EFFECTS OF INVENTION

According to the present invention, by utilizing Peru balsam essential oil as an active component, it is possible to mask the bitter taste of potassium chloride. By utilizing the method of masking the bitter taste of potassium chloride of the present invention, it is possible to contribute to salt reduction in the industry of food or drink products.

### DESCRIPTION OF EMBODIMENTS

The present invention is described in detail below according to the embodiments. However, the invention is not limited to these embodiments. First, the active component of the present invention is Peru balsam essential oil.

### - Peru balsam essential oil (oil Peru balsam) -

The term Peru balsam essential oil (oil Peru balsam) as used in the present invention refers to a component of the essential oil of Peru balsam (a tropical tree of Leguminosae). Here, the essential oil refers to an aromatic volatile component obtained from plant trunks, resins, flowers, leaves, buds, fruits and the like. The essential oil is mainly made of a terpene compound, an aromatic compound, esters and the like, and is separated by distillation, squeezing, or extraction.

The Peru balsam essential oil in the present invention generally refers to a fragrance or an essential oil component extracted from the resin of the tree by distillation or solvent extraction. Alternatively, it may be distilled from the xylem or the bark of the tree.

However, the method of extraction is not limited to the above, and various methods can be utilized.

The Peru balsam essential oil (oil Peru balsam) utilized in the present invention can be obtained by, for example, acquiring a commercially available type, and used as a fragrance compound for food or drink products.

When the Peru balsam essential oil (oil Peru balsam) is used for producing a food or drink product, it is preferable to utilize a type dissolved in a solvent such as liquid fat or oil.

### - Bitter taste of potassium chloride -

In recent years, there has been a strong demand for suppressing the intake of salt (sodium content) for the purpose of preventing hypertension and complications caused by hypertension, and the like. However, reducing the amount of salt makes food or drink products tasteless, so there is a need for so-called salt alternatives, which present a salty taste in place of salt. Potassium chloride is most commonly used as a salt alternative, but potassium chloride has a distinctive bitter taste (harsh taste) in addition to salty taste.

### - Bitter taste masking for potassium chloride -

According to the taste masking of the present invention, the harsh taste or the bitter taste of potassium chloride described above can be masked. Here, masking means that the bitter taste (harsh taste) of potassium chloride described above can be reduced or camouflaged to make it less perceivable when a human sensory evaluation is performed.

In addition to masking the harsh taste or bitter taste of potassium chloride in the case of human sensory evaluation as described above, if sodium chloride (salt) is present at the same time as potassium chloride, it often has the effect of enhancing the salty taste that the sodium chloride (salt) provides.

### - Sodium chloride (salt) -

In the food or drink product containing potassium chloride of the present invention, it is preferable that the food or drink product contains sodium chloride. By containing the sodium chloride, the original salty taste due to the sodium chloride can be exhibited, and the effect of combined use of potassium chloride and potassium chloride can effectively reduce salt.

In addition, the use of Peru balsam essential oil of the present invention can improve the bitter taste of potassium chloride or enhance the salty taste of sodium chloride.

The content ratio of potassium chloride and sodium chloride in a food or drink product is not particularly limited, but is generally in the range of potassium chloride : sodium chloride is about 1:100 to 15:7.

Preferably, the ratio of potassium chloride : sodium chloride is about 1:50 to 3:2. More preferably, the ratio of potassium chloride : sodium chloride is about 1:20 to 1:4.

### - Concentration of Peru balsam essential oil relative to potassium chloride in a food or drink product -

The concentration used of Peru balsam essential oil to potassium chloride in the present invention is not particularly limited.

However, generally, the following concentrations are preferable relative to the concentration of potassium chloride. For example, if potassium chloride is around 0.1 to 1.5% at the time of eating, typically, the concentration of Peru balsam essential oil used is about 1 ppb to 1 ppm in the food or drink product at the time of eating. Preferably, it is approximately 10 to 1000 ppb, and more preferably, 50 to 500 ppb.

The concentration used may also depend on the concentration of the Peru balsam essential oil and the type and condition of the food or drink product to be used.

### - Food or drink product containing potassium chloride -

The potassium chloride-containing food or drink product as referred to in the present invention is a food or drink product using potassium chloride as described above as a raw material. It is only necessary that the potassium chloride is partially utilized as a raw material, and typically, a part of the sodium chloride used is replaced with potassium chloride for reducing salt in particular.

In addition, raw materials other than potassium chloride are obviously contained. More specifically, in addition to potassium chloride, the food or drink product may contain sodium chloride, sugars, thickeners, various salts, animal proteins (e.g. beef, pork, chicken, fish meat), plant proteins, carbohydrates (e.g. grains, vegetables), lipids, dietary fibers, water, minerals, vitamins, dyes, food additives and the like.

Next, the amount of potassium chloride used in the potassium chloride-containing food or drink product in the present invention is not particularly limited. Even if a small amount or a trace amount is contained, it is obviously regarded as a potassium chloride-containing food or drink product. It is preferable that the food or drink product contains sodium chloride.

In addition, the potassium chloride-containing food or drink product can obviously be in either solid or liquid form.

Specifically, examples of the food or drink product include noodles, wontons, gratins, stews, curries, cooked soups and bouillons (e.g. chicken soup, corn soup, vegetable soup), extracts of meat, vegetables and the like, various mixed seasonings, various sauces and bastes, processed meat products such as ham and sausage, and other food or drink products normally served as daily meals. Moreover, these are not particularly limited to either general commercially available food products, food products for business use, or meals prepared and cooked in restaurants and the like.

If the bitter taste masking agent for potassium chloride according to the present invention is applied to a product in such forms as granular or liquid form, as in the case of "low-sodium seasonings" in the marketplace, it can also be easily used/utilized for cooked items at home.

In particular, the present invention can be suitably used in health food products and instant food products. Specific examples of food names using potassium chloride include instant food products (e.g. instant noodles such as instant cup noodles and instant bagged noodles, instant cup rice, and instant soup).

In particular, in instant noodles (instant cup noodles) and instant cup rice, powdered or liquid soups that partially use potassium chloride as a trace raw material used in combination with sodium chloride are sometimes used, and the present invention can be suitably applied to these soups.

It can also be suitably applied to various kinds of ingredients (e.g. minced meat paste products such as hamburgers, minced meat balls, and fish paste products such as hanpen) that utilize potassium chloride.

Obviously, carbohydrates such as starch, animal proteins (e.g. beef, pork, chicken), seasonings such as salt, soy sauce, and sauces, and spices may also be used as other components constituting the dried ingredients and pseudo meat.

### - Masking agent -

The present invention is intended for a bitter taste masking agent for potassium chloride comprising Peru balsam essential oil, and the bitter taste masking agent includes any aspect provided that the agent is added to or comprised in a potassium chloride-containing food or drink product in the aspect.

In addition to Peru balsam essential oil, it is obvious that the bitter taste masking agent may also contain other compounds, fragrances, various additives, spices and other components that can be utilized in various food or drink products.

The masking agent of the present invention has the effect of reducing the bitter taste or the harsh taste of food or drink products containing potassium chloride as described above, or, in the case of food or drink products containing sodium chloride, it may have the effect of enhancing the salty taste of the sodium chloride.

In addition, the masking agent of the present invention only needs to comprise at least Peru balsam essential oil, and may obviously contain other components such as various fats or oils, solvents, fragrances, and seasonings.

Furthermore, the form of the bitter taste imparting agent is not necessarily limited to the case in which it is stored in a container or the like, of a specified format. It is only needed that there is an ingredient comprising at least Peru balsam essential oil (various cooking ingredients for addition of such forms as liquid, powder, granular forms) to reduce the bitter taste and the like, of potassium chloride when producing or eating food or drink products. Any aspect is included in the bitter taste imparting agent according to the present invention provided that in the aspect, the ingredient is added or mixed during the production or eating of the calcium chloride-containing food or drink product.

Next, in the present invention, it is preferable that each of the following components is included in addition to Peru balsam essential oil, which will be explained below.

### - Arginine, glutamic acid, lysine and citrulline -

In the present invention, it is preferable to use arginine, glutamic acid, lysine or citrulline among amino acids combined with oil Peru balsam (Peru balsam essential oil). Obviously, these amino acids may also be utilized in combination.

For these amino acids, generally, the ratio may be approximately 1000 to 50000 against 1 for the undiluted solution of oil Peru balsam. More preferably, the ratio is approximately 5000 to 20000.

In the present invention, it is preferable to use acetoin, diacetyl and 2,3-pentanedione among ketones combined with oil Peru balsam (Peru balsam essential oil). For these ketones, generally, the ratio may be approximately 1 to 100 against 1 for the undiluted solution of oil Peru balsam. More preferably, the ratio is approximately 5 to 50.

### - Farnesol, nerolidol, caryophyllene and nootkatone (terpenes) -

In the present invention, it is preferable to use farnesol, nerolidol, caryophyllene and nootkatone among terpenes combined with oil Peru balsam. For these terpenes, generally, the ratio may be approximately 0.1 to 50 against 1 for the undiluted solution of oil Peru balsam. More preferably, the ratio is approximately 1 to 10.

### - Birch essential oil, hickory smoke essential oil or clove essential oil (tree-based natural fragrance components) -

In the present invention, ingredients having a tree-based natural fragrance (including those with a smoky flavor) may be utilized combined with Peru balsam essential oil. Of these, it is preferable to concurrently use birch essential oil, hickory smoke essential oil or clove essential oil. For these tree-based natural fragrances, generally, the ratio may be approximately 0.01 to 10 against 1 for the undiluted solution of Peru balsam essential oil (oil Peru balsam). More preferably, the ratio is approximately 0.1 to 1.

### - Guaiacol, eugenol, vanillin and phenol -

In the present invention, it is preferable to use a compound selected from guaiacol, eugenol, vanillin and phenol, among phenols, aromatics and aldehydes, combined with Peru balsam essential oil. For these compounds, generally, the ratio may be approximately 0.01 to 10 against 1 for the undiluted solution of oil Peru balsam. More preferably, the ratio is approximately 0.1 to 1.

### - Lactic acid, tartaric acid and malic acid (acidulants) -

In the present invention, it is preferable to use an acidulant such as lactic acid, tartaric acid and malic acid, combined with oil Peru balsam (Peru balsam essential oil). For these acidulants, the ratio may be approximately 1 to 1000 against 1 for the undiluted solution of oil Peru balsam. More preferably, the ratio is approximately 10 to 200.

### - Further combined use of ingredients -

In the present invention, Peru balsam essential oil is a basic component for the potassium chloride masking agent, masking method, and the like. As described above, it is preferable to use amino acids such as arginine, ketones such as acetoin, ketones such as farnesol, tree-based natural fragrance components such as birch essential oil, components such as guaiacol, and acidulants such as lactic acid, combined with Peru balsam essential oil. Furthermore, each of these components may, obviously, be utilized in combination.

### - Food or drink product using the bitter taste masking agent of the present invention

The bitter taste imparting agent of the present invention can be added when potassium chloride is used to reduce salt in a food or drink product which presents a salty taste to reduce the bitter taste derived from potassium chloride in the food or drink product. For example, when potassium chloride is used as a part of powdered or liquid soup, or in various food or drink products, the masking agent can be utilized by adding the same thereto. Specifically, it can be utilized in a variety of liquid food or drink products such as soups which present a salty taste and solid food or drink products such as hamburgers and minced meat balls. In particular, in the case that the soups and various food or drink products contain sodium chloride and a portion of sodium chloride is replaced with potassium chloride, the masking agent can be effectively utilized.

Particularly, the masking agent can also be suitably utilized for instant food products as processed food products, such as instant noodles (instant cup noodles, instant bagged noodles), instant soups, and instant cup rice. It can be suitably utilized as an attached soup (powdered soup, liquid soup) and attached dried ingredients for these instant food products. Furthermore, it can also be utilized for noodles (hot-air dried noodles, fried processed noodles) and the like.

### - Potassium chloride-containing food or drink products comprising Peru balsam essential oil -

The present invention is also intended for a food or drink product that contains potassium chloride, comprising Peru balsam essential oil (oil Peru balsam). Here, if a potassium chloride-containing food or drink product comprises Peru balsam essential oil, first of all, there is a case in which Peru balsam essential oil is added in any step of the production process of the potassium chloride-containing food or drink product.

In addition, in the case of a processed food product, for example, such as instant noodles and instant rice, when an eater opens an attached soup pack or the like and adds contents as an attached flavor at the time of eating, the contents contained in the soup pack or the like may also be applicable, and it is also possible to have the flavor added to the noodles and the rice in advance. Any aspect is included provided that in the aspect, a potassium chloride-containing food or drink product and Peru balsam essential oil (oil Peru balsam) are present at the same time when eating.

Furthermore, the Peru balsam essential oil to be added does not necessarily have to be refined. Obviously, any aspect is included provided that in the aspect, fragrances, food ingredients, various food or drink products and the like contain Peru balsam essential oil as a part of components thereof.

The present invention is also intended for a method of producing a food or drink product comprising a step of containing Peru balsam essential oil (oil Peru balsam) in the producing process of the food or drink product for the purpose of masking the flavor of potassium chloride. That is, it is only needed that there is a process comprising a step of containing Peru balsam essential oil (oil Peru balsam) in any production process of the food or drink product. The amount used thereof is not limited, but generally preparation is made so that the concentration of Peru balsam essential oil at the time of eating is 1 ppb to 1 ppm. The concentration is preferably about 10 to 1000 ppb and more preferably about 50 to 500 ppb.

### - Method of masking a flavor of potassium chloride by comprising Peru balsam essential oil -

The present invention is also intended for a method of masking a flavor of potassium chloride by comprising Peru balsam essential oil (oil Peru balsam) for the purpose of masking the flavor of potassium chloride.

### EXAMPLES

Examples of the invention are described below. However, the invention is not limited to these Examples.

### [Test example 1] Effect of adding Peru balsam essential oil to water containing potassium chloride and sodium chloride

It was tested whether the bitter taste of potassium chloride can be masked by adding a diluted solution of Peru balsam essential oil to an aqueous solution containing potassium chloride and sodium chloride.

Commercially available Peru balsam essential oil (oil balsam Peru) was utilized. Next, 100 g of aqueous solution of 1% by weight of sodium chloride/potassium chloride (0.3% by weight of sodium chloride + 0.7% by weight of potassium chloride) was prepared. For the aqueous solution, oil balsam Peru (undiluted) was diluted as described in Table 1 with ethanol as a solvent to prepare 2 different diluted solutions of 0.01% by weight and 0.001% by weight. The diluted solutions were added to the aqueous solution of 1% by weight of sodium chloride/potassium chloride (100 g) in each weight listed in Table 1 respectively. In this way, each test solution was prepared for Test section 1 to Test section 9.

Next, each test aqueous solution in the respective Test section was subjected to sensory evaluation. The evaluation was performed by five experienced panelists, who rated the solutions on 9 scales: scale 1 (equivalent to no oil balsam Peru solution added) to scale 9 (highly effective in masking potassium chloride), depending on the degree of masking harsh taste of potassium chloride.

The evaluation was rated as 1 if no oil balsam Peru was added or if the addition of oil balsam Peru did not mask (reduce) the bitter taste and the like of potassium chloride. The evaluation was rated as 2 or higher if some masking effect was present. The evaluation was made by increasing the numerical value of the evaluation as the masking effect improved. Evaluation rated as 9 was an evaluation in which the bitter taste of potassium chloride was hardly perceptible. The results are shown in the lower column of Table 1.

**[Table 1]**

| | Ingredient name | Concentration used | Test section 1 | Test section 2 | Test section 3 | Test section 4 | Test section 5 | Test section 6 | Test section 7 | Test section 8 | Test section 9 |
|---|---|---|---|---|---|---|---|---|---|---|---|
| Ingredient | Oil balsam Peru | 0.01% | | | | | | 0.01 g | 0.02 g | 0.04 g | 0.1 g |
| | | 0.001% | | 0.01 g | 0.02 g | 0.04 g | 0.08 g | | | | |
| Evaluation | (1-9) | | 1 | 1 | 2 | 2 | 4 | 4 | 4 | 3 | 2 |

As a result, it was found that the bitter taste of potassium chloride could be masked by adding oil balsam Peru.

### [Test example 2] Studies of combined use of amino acids

The effect of masking the flavor of potassium chloride by oil balsam Peru was confirmed, and it was further investigated whether adding amino acids could enhance the effect.

The amino acids prepared were glycine, alanine, arginine, leucine, isoleucine, aspartic acid, cystine, glutamine, glutamic acid, valine, histidine, tyrosine, threonine, proline, tryptophan, lysine, methionine, phenylalanine, ornithine and citrulline, and the diluted 0.01% oil Peru balsam used in Test example 1 was utilized.

Next, 100 g of aqueous solution of 1% by weight of sodium chloride/potassium chloride (0.3% by weight of sodium chloride + 0.7% by weight of potassium chloride) was prepared. To the aqueous solution, oil balsam Peru (0.01% by weight) and each amino acid were added as described in Tables 2-1 and Table 2-2, and a sensory evaluation was performed.

The weight of the added solution of oil balsam Peru and the weight of the solution of each amino acid are shown in Tables 2-1 and Table 2-2. The results of the sensory evaluation are also shown in the lower columns of Tables 2-1 and Table 2-2.

**[Table 2-1]**

| | Ingredient name | Concentration used | Test section 1 | Test section 2 | Test section 3 | Test section 4 | Test section 5 | Test section 6 | Test section 7 | Test section 8 | Test section 9 | Test section 10 |
|---|---|---|---|---|---|---|---|---|---|---|---|---|
| | Glycine | | 0.02 g | | | | | | | | | |
| | DL-alanine | | | 0.02 g | | | | | | | | |
| | L-arginine | | | | 0.01 g | | | | | | | |
| | L-leucine | | | | | 0.01 g | | | | | | |
| | L-isoleucine | | | | | | 0.01 g | | | | | |
| | Sodium L-aspartate | | | | | | | 0.01 g | | | | |
| | Cystine | | | | | | | | 0.01 g | | | |
| | Glutamine | | | | | | | | | 0.01 g | | |
| | Glutamic acid | | | | | | | | | | 0.01 g | |
| | Monosodium glutamate | | | | | | | | | | | 0.01 g |
| Amino acids | Valine | | | | | | | | | | | |
| | Histidine | | | | | | | | | | | |
| | Tyrosine | | | | | | | | | | | |
| | Threonine | | | | | | | | | | | |
| | Proline | | | | | | | | | | | |
| | Tryptophan | | | | | | | | | | | |
| | L-lysine hydrochloride | | | | | | | | | | | |
| | D,L-methionine | | | | | | | | | | | |
| | L-phenylalanine | | | | | | | | | | | |
| | L-ornithine hydrochloride | | | | | | | | | | | |
| | L-citrulline | | | | | | | | | | | |
| Ingredient | Oil balsam Peru | 0.01% | 0.01 g | 0.01 g | 0.01 g | 0.01 g | 0.01 g | 0.01 g | 0.01 g | 0.01 g | 0.01 g | 0.01 g |
| Evaluation | (1-9) | | 4 | 4 | 7 | 3 | 3 | 4 | 3 | 4 | 5 | 5 |

**[Table 2-2]**

| | Ingredient name | Concentration used | Test section 11 | Test section 12 | Test section 13 | Test section 14 | Test section 15 | Test section 16 | Test section 17 | Test section 18 | Test section 19 | Test section 20 | Test section 21 |
|---|---|---|---|---|---|---|---|---|---|---|---|---|---|
| | Glycine | | | | | | | | | | | | |
| | DL-alanine | | | | | | | | | | | | |
| | L-arginine | | | | | | | | | | | | |
| | L-leucine | | | | | | | | | | | | |
| | L-isoleucine | | | | | | | | | | | | |
| | Sodium L-aspartate | | | | | | | | | | | | |
| | Cystine | | | | | | | | | | | | |
| | Glutamine | | | | | | | | | | | | |
| | Glutamic acid | | | | | | | | | | | | |
| | Monosodium glutamate | | | | | | | | | | | | |
| Amino acids | Valine | | 0.01 g | | | | | | | | | | |
| | Histidine | | | 0.01 g | | | | | | | | | |
| | Tyrosine | | | | 0.01 g | | | | | | | | |
| | Threonine | | | | | 0.01 g | | | | | | | |
| | Proline | | | | | | 0.01 g | | | | | | |
| | Tryptophan | | | | | | | 0.01 g | | | | | |
| | L-lysine hydrochloride | | | | | | | | 0.01 g | | | | |
| | D,L-methionine | | | | | | | | | 0.01 g | | | |
| | L-phenylalanine | | | | | | | | | | 0.01 g | | |
| | L-ornithine hydrochloride | | | | | | | | | | | 0.01 g | |
| | L-citrulline | | | | | | | | | | | | 0.01 g |
| Ingredient | Oil balsam Peru | 0.01% | 0.01 g | 0.01 g | 0.01 g | 0.01 g | 0.01 g | 0.01 g | 0.01 g | 0.01 g | 0.01 g | 0.01 g | 0.01 g |
| Evaluation | (1-9) | | 4 | 4 | 4 | 4 | 3 | 3 | 5 | 3 | 3 | 3 | 6 |

It was found that the use of arginine, glutamic acid, monosodium glutamate, lysine or citrulline, combined with oil balsam Peru, improved the masking effect of potassium chloride.

### [Test example 3] Adding effect of ketones used in combination

The effect of masking the flavor of potassium chloride by oil balsam Peru was confirmed, and it was further investigated whether adding ketones could enhance the effect.

As the ketones, acetoin, diacetyl, 2,3-pentanedione, 2,3-hexanedione, and 4-acetoxy-2,5-dimethyl-3(2H)-furanon were utilized.

Next, 100 g of aqueous solution of 1% by weight of sodium chloride/potassium chloride (0.3% by weight of sodium chloride + 0.7% by weight of potassium chloride) was prepared. To the aqueous solution, oil balsam Peru (0.01% by weight) and solutions of each ketone (each % by weight as described in Table 3) were added as described in Table 3, and a sensory evaluation was performed.

The weight of the added solution of oil balsam Peru and the weight of the solution of each ketone are shown in Table 3. The results of the sensory evaluation are also shown in the lower columns of Table 3.

**[Table 3]**

| | Ingredient name | Concentration used | Test section 1 | Test section 2 | Test section 3 | Test section 4 | Test section 5 | Test section 6 | Test section 7 |
|---|---|---|---|---|---|---|---|---|---|
| Ketones | acetoin | 0.1% | | | 0.01 g | | | | |
| | diacetyl | 0.1% | | | | 0.01 g | | | |
| | 2,3-pentanedione | 0.1% | | | | | 0.01 g | | |
| | 2,3-hexanedione | 0.1% | | | | | | 0.01 g | |
| | 4-acetoxy-2,5-dimethyl-3 (2H)-furanon | 0.01% | | | | | | | 0.01 g |
| Basic ingredient | Oil balsam Peru | 0.01% | | 0.01 g | 0.01 g | 0.01 g | 0.01 g | 0.01 g | 0.01 g |
| Evaluation | (1-9) | | 1 | 4 | 6 | 6 | 5 | 3 | 2 |

It was found that the use of acetoin, diacetyl, or 2,3-pentanedione, combined with oil balsam Peru, improved the masking effect of potassium chloride.

### [Test example 4] Adding effect of terpenes used in combination

The effect of masking the flavor of potassium chloride by oil balsam Peru was confirmed, and it was further investigated whether adding terpenes could enhance the effect.

As the terpenes, myrcene, ocimene, limonene, terpineol, pinene, camphor, farnesol, nerolidol, elemene, caryophyllene, and nootkatone were utilized.

Next, 100 g of aqueous solution of 1% by weight of sodium chloride/potassium chloride (0.3% by weight of sodium chloride + 0.7% by weight of potassium chloride) was prepared. To the aqueous solution, oil balsam Peru (0.01% by weight) and solutions of each terpene (each % by weight as described in Table 4) were added as described in Table 4, and a sensory evaluation was performed. The weight of the added solution of oil balsam Peru and the weight of the solution of each terpene are shown in Table 4. The results of the sensory evaluation are also shown in the lower columns of Table 4.

**[Table 4]**

| Classification 1 | Classification 2 | Ingredient name | Concentration used | Test section 1 | Test section 2 | Test section 3 | Test section 4 | Test section 5 | Test section 6 | Test section 7 | Test section 8 | Test section 9 | Test section 10 | Test section 11 |
|---|---|---|---|---|---|---|---|---|---|---|---|---|---|---|
| | Acyclic monoterpenes | Myrcene | 0.01% | 0.01 g | | | | | | | | | | |
| | | Ocimene | 0.01% | | 0.01 g | | | | | | | | | |
| | Monocyclic monoterpenes | Limonene | 0.01% | | | 0.01 g | | | | | | | | |
| | | Terpineol | 0.01% | | | | 0.01 g | | | | | | | |
| | Bicyclic monoterpenes | Pinene | 0.01% | | | | | 0.01 g | | | | | | |
| Terpenes | | Camphor | 0.01% | | | | | | 0.01 g | | | | | |
| | Acyclic sesquiterpenes | Farnesol | 0.01% | | | | | | | 0.01 g | | | | |
| | | Nerolidol | 0.01% | | | | | | | | 0.01 g | | | |
| | Monocyclic sesquiterpene | Elemene | 0.01% | | | | | | | | | 0.01 g | | |
| | Bicyclic sesquiterpenes | Caryophyllene | 0.01% | | | | | | | | | | 0.01 g | |
| | | Nootkatone | 0.01% | | | | | | | | | | | 0.01 g |
| Basic ingredient | | Oil balsam Peru | 0.01% | 0.01 g | 0.01 g | 0.01 g | 0.01 g | 0.01 g | 0.01 g | 0.01 g | 0.01 g | 0.01 g | 0.01 g | 0.01 g |
| Evaluation | | (1-9) | | 4 | 3 | 3 | 3 | 4 | 4 | 5 | 5 | 4 | 6 | 5 |

It was found that the use of farnesol, nerolidol, caryophyllene, or nootkatone, combined with oil balsam Peru, improved the masking effect of potassium chloride.

### [Test example 5] Adding effect of tree-based natural components used in combination

The effect of masking the flavor of potassium chloride by oil balsam Peru was confirmed, and it was further investigated whether adding tree-based natural components such as birch essential oil could enhance the effect.

As the tree-based natural components, birch essential oil (Oil birch, commercial product), hickory smoke essential oil (Oil hickory smoke, commercial product), clove essential oil (Oil clove, commercial product), oil smoke (Mesquite essential oil, commercial product)), SMOKES CHERRY WOOD (commercial product) and OAKWOOD TINCTURE (Oakwood tincture, commercial product) were utilized.

Next, 100 g of aqueous solution of 1% by weight of sodium chloride/potassium chloride (0.3% by weight of sodium chloride + 0.7% by weight of potassium chloride) was prepared. To the aqueous solution, oil balsam Peru (0.01% by weight) and each tree-based natural component (0.001% by weight or 0.01% by weight) were added as described in Table 5, and a sensory evaluation was performed. The weight of the added solution of oil balsam Peru and the weight of each tree-based natural component are shown in Table 5. The results of the sensory evaluation are also shown in the lower columns of Table 5.

**[Table 5]**

| | Ingredient name | Concentration used | Test section 1 | Test section 2 | Test section 3 | Test section 4 | Test section 5 | Test section 6 |
|---|---|---|---|---|---|---|---|---|
| Tree-based natural ingredients | Oil birch | 0.001% | 0.01 g | | | | | |
| | Oil hickory smoke | 0.001% | | 0.01 g | | | | |
| | Oil clove bud | 0.001% | | | 0.01 g | | | |
| | Oil smoke | 0.001% | | | | 0.01 g | | |
| | SMOKES CHERRY WOOD | 0.01% | | | | | 0.01 g | |
| | OAKWOOD TINCTURE | 0.01% | | | | | | 0.01 g |
| Natural | Oil balsam Peru | 0.01% | 0.01 g | 0.01 g | 0.01 g | 0.01 g | 0.01 g | 0.01 g |
| Evaluation | (1-9) | | 6 | 4 | 6 | 3 | 4 | 4 |

It was found that the use of birch essential oil or clove essential oil, combined with oil balsam Peru, improved the masking effect of potassium chloride.

### [Test example 6] Effect of combined use of phenols, aromatics or aldehydes

The effect of masking the flavor of potassium chloride by oil balsam Peru was confirmed, and it was further investigated whether adding either phenols, aromatics or aldehydes could enhance the effect.

As the components of phenols, aromatics or aldehydes, guaiacol, 4-vinylguaiacol, 4-ethylguaiacol, eugenol, vanillin, acetyl vanillin, 4-methyl-2,6-dimethoxy phenol and phenol were utilized.

Next, 100 g of aqueous solution of 1% by weight of sodium chloride/potassium chloride (0.3% by weight of sodium chloride + 0.7% by weight of potassium chloride) was prepared. To the aqueous solution, oil balsam Peru (0.01% by weight) as well as phenols, aromatics or aldehydes (0.0001% by weight, 0.001% by weight, or 0.01% by weight) were added as described in Table 6, and a sensory evaluation was performed. The weight of the added solution of oil balsam Peru and the weight of phenols, aromatics or aldehydes are shown in Table 6. The results of the sensory evaluation are also shown in the lower columns of Table 6.

**[Table 6]**

| | Ingredient name | Concentration used | Test section 1 | Test section 2 | Test section 3 | Test section 4 | Test section 5 | Test section 6 | Test section 7 | Test section 8 |
|---|---|---|---|---|---|---|---|---|---|---|
| Phenols, Aromatics, Aldehydes | guaiacol | 0.0001% | 0.01 g | | | | | | | |
| | 4-vinylguaiacol | 0.001% | | 0.01 g | | | | | | |
| | 4-ethylguaiacol | 0.001% | | | 0.01 g | | | | | |
| | eugenol | 0.001% | | | | 0.01 g | | | | |
| | vanillin | 0.001% | | | | | 0.01 g | | | |
| | Acetyl vanillin | 0.001% | | | | | | 0.01 g | | |
| | 4-methyl-2,6-dimethoxy phenol | 0.001% | | | | | | | 0.01 g | |
| | phenol | 0.01% | | | | | | | | 0.01 g |
| Basic ingredient | Oil balsam Peru | | 0.01 g | 0.01 g | 0.01 g | 0.01 g | 0.01 g | 0.01 g | 0.01 g | 0.01 g |
| Evaluation | (1-9) | | 6 | 4 | 4 | 6 | 5 | 3 | 4 | 6 |

It was found that the use of guaiacol, eugenol, or vanillin among phenols, aromatics or aldehydes improved the masking effect of potassium chloride.

### [Test example 7] Effect of combined use of acidulants

The effect of masking the flavor of potassium chloride by oil balsam Peru was confirmed, and it was further investigated whether adding acidulants could enhance the effect.

As the acidulants, lactic acid, tartaric acid, succinic acid, citric acid, gluconic acid, acetic acid or malic acid was utilized.

Next, 100 g of aqueous solution of 1% by weight of sodium chloride/potassium chloride (0.3% by weight of sodium chloride + 0.7% by weight of potassium chloride) was prepared. To the aqueous solution, oil balsam Peru (0.01% by weight) and each acidulant (each % by weight as described in Table 7) was added as described in Table 7, and a sensory evaluation was performed. The weight of the added solution of oil balsam Peru and the weight of the acidulants are shown in Table 7. The results of the sensory evaluation are also shown in the lower columns of Table 7.

**[Table 7]**

| | Ingredient name | Concentration used | Test section 1 | Test section 2 | Test section 3 | Test section 4 | Test section 5 | Test section 6 | Test section 7 |
|---|---|---|---|---|---|---|---|---|---|
| Acidulants | Lactic acid | 1.0% | 0.01 g | | | | | | |
| | Tartaric acid | 1.0% | | 0.01 g | | | | | |
| | Succinic acid | 1.0% | | | 0.01 g | | | | |
| | Citric acid | 1.0% | | | | 0.01 g | | | |
| | Gluconic acid | 10.0% | | | | | 0.01 g | | |
| | Acetic acid | 0.1% | | | | | | 0.01 g | |
| | Malic acid | 0.1% | | | | | | | 0.01 g |
| Natural | Oil balsam Peru | 0.01% | 0.01 g | 0.01 g | 0.01 g | 0.01 g | 0.01 g | 0.01 g | 0.01 g |
| Evaluation | (1-9) | | 6 | 5 | 4 | 3 | 4 | 4 | 5 |

It was found that the use of lactic acid, tartaric acid, and malic acid among acidulants improved the masking effect of potassium chloride.

### [Test example 8] Effect of combined use of ketones and terpenes

The effect of masking the flavor of potassium chloride by using oil balsam Peru combined with specific ketones or terpenes was confirmed, and it was further investigated whether the effect could be further enhanced by the use of these ketones and terpenes in combination.

The effect of these combinations was investigated by utilizing acetoin and diacetyl as ketones and utilizing nerolidol, caryophyllene, and nootkatone as terpenes.

Next, 100 g of aqueous solution of 1% by weight of sodium chloride/potassium chloride (0.3% by weight of sodium chloride + 0.7% by weight of potassium chloride) was prepared. To the aqueous solution, oil balsam Peru (0.01% by weight) and each of the ketones and terpenes was added as described in Table 8, and a sensory evaluation was performed. The weight of the added solution of oil balsam Peru and the weight of each of the ketones and terpenes are shown in Table 8. The results of the sensory evaluation are also shown in the lower columns of Table 8.

**[Table 8]**

| | Ingredient name | Concentration used | Test section 1 | Test section 2 | Test section 3 | Test section 4 | Test section 5 | Test section 6 |
|---|---|---|---|---|---|---|---|---|
| Ketones | acetoin | 0.1% | 0.01 g | | 0.01 g | | 0.01 g | |
| | diacetyl | 0.1% | | 0.01 g | | 0.01 g | | 0.01 g |
| Terpenes | Nerolidol | 0.01% | 0.01 g | 0.01 g | | | | |
| | Caryophyllene | 0.01% | | | 0.01 g | 0.01 g | | |
| | Nootkatone | 0.01% | | | | | 0.01 g | 0.01 g |
| Basic ingredient | Oil balsam Peru | 0.01% | 0.01 g | 0.01 g | 0.01 g | 0.01 g | 0.01 g | 0.01 g |
| Evaluation | (1-9) | | 5 | 5 | 7 | 7 | 6 | 6 |

It was found that the addition of the ketones (acetoin or diacetyl) and the terpenes (nerolidol, caryophyllene or nootkatone) to oil Peru balsam further improved the masking effect. Particularly, the combination of acetoin and caryophyllene, and diacetyl and caryophyllene showed a significant effect.

### [Test example 9] Effect of combined use of ketones and tree-based natural components

The effect of masking the flavor of potassium chloride by using oil balsam Peru combined with specific ketones or tree-based natural components was confirmed, and it was further investigated whether the effect could be further enhanced by the use of these ketones and tree-based natural components in combination.

The effect of these combinations was investigated by utilizing acetoin or diacetyl as ketones and utilizing birch essential oil, hickory smoke essential oil or clove essential oil as tree-based natural components.

Next, 100 g of aqueous solution of 1% by weight of sodium chloride/potassium chloride (0.3% by weight of sodium chloride + 0.7% by weight of potassium chloride) was prepared. To the aqueous solution, oil balsam Peru (0.01% by weight) and each of the ketones (0.1% by weight) and tree-based natural components (0.001% by weight or 0.1% by weight) was added as described in Table 9, and a sensory evaluation was performed. The weight of the added solution of oil balsam Peru and the weight of each of the ketones and tree-based natural components are shown in Table 9. The results of the sensory evaluation are also shown in the lower columns of Table 9.

**[Table 9]**

| | Ingredient name | Concentration used | Test section 1 | Test section 2 | Test section 3 | Test section 4 | Test section 5 | Test section 6 |
|---|---|---|---|---|---|---|---|---|
| Ketones | acetoin | 0.1% | 0.01 g | | 0.01 g | | 0.01 g | |
| | diacetyl | 0.1% | | 0.01 g | | 0.01 g | | 0.01 g |
| Tree-based natural ingredients | Oil birch | 0.001% | 0.01 g | 0.01 g | | | | |
| | Oil hickory smoke | 0.001% | | | 0.01 g | 0.01 g | | |
| | Oil clove budN | 0.01% | | | | | 0.01 g | 0.01 g |
| Basic ingredient | Oil balsam Peru | 0.01% | 0.01 g | 0.01 g | 0.01 g | 0.01 g | 0.01 g | 0.01 g |
| Evaluation | (1-9) | | 7 | 7 | 5 | 5 | 7 | 7 |

It was found that the addition of the ketones (acetoin or diacetyl) and tree-based natural components (birch essential oil, hickory smoke essential oil or clove essential oil) to oil Peru balsam further improved the masking effect. Particularly, the combination of acetoin and birch essential oil, diacetyl and birch essential oil, acetoin and clove essential oil and diacetyl and clove essential oil showed a significant effect.

## Claims

1. A bitter taste masking agent for potassium chloride comprising Peru balsam essential oil as an active component.

2. The bitter taste masking agent for potassium chloride according to claim 1, further comprising at least one or more selected from the group consisting of arginine, glutamic acid, lysine, and citrulline.

3. The bitter taste masking agent for potassium chloride according to claim 1 or 2, further comprising at least one or more selected from the group consisting of acetoin, diacetyl, and 2,3-pentanedione.

4. The bitter taste masking agent for potassium chloride according to any one of claims 1 to 3, further comprising at least one or more selected from the group consisting of farnesol, nerolidol, caryophyllene and nootkatone.

5. The bitter taste masking agent for potassium chloride according to any one of claims 1 to 4, further comprising at least one or more selected from birch essential oil, hickory smoke essential oil, and clove essential oil.

6. The bitter taste masking agent for potassium chloride according to any one of claims 1 to 5, further comprising at least one or more selected from the group consisting of guaiacol, eugenol, vanillin, and phenol.

7. The bitter taste masking agent for potassium chloride according to any one of claims 1 to 6, further comprising at least one or more selected from the group consisting of lactic acid, tartaric acid, and malic acid.

8. A potassium chloride-containing food or drink product comprising Peru balsam essential oil.

9. A method of producing a potassium chloride-containing food or drink product comprising a step of adding Peru balsam essential oil.

10. A method of masking a bitter taste for a potassium chloride-containing food or drink product utilizing Peru balsam essential oil.
